# EUROPÄISCHE PATENTANMELDUNG

(11) **EP 0 681 374 A1**
(43) Veröffentlichungstag der Anmeldung: **08.11.1995**
(21) Anmeldenummer: 94106821.5
(22) Anmeldetag: 02.05.1994
(51) Int. Cl.: H04B 1/00, H04B 7/26

(54) **"On-Frequency" Repeater mit optimiertem Wirkungsgrad für digitale Funknetze GSM, DCS 1800, PCS 1900 und ähnliches**

(71) Anmelder: MIKOM GmbH, D-86675 Buchdorf (DE)
(72) Erfinder: Schmidt, Karl-Heinz, D-86675 Buchdorf (DE)

(57) **Zusammenfassung**

Die Einsatzmöglichkeiten von Repeatern sind abhängig von der verfügbaren Ausgangsleistung und dem Wirkungsgrad der Systeme.

Mit kanalselektiven Repeatern mit Kanalendstufen, wie beschrieben, kann pro Kanal eine Ausgangsleistung von mehreren Watt unter Einhaltung der Störstrahlvorschriften (besonders Intermodulationsprodukte) bei niedriger Verlustleistung erreicht werden. Der Wirkradius eines Systems wird dadurch erhöht.

Durch Stummschaltung von Systemteilen in betriebslosen oder betriebsarmen Zeitabschnitten wird die aufgenommene Versorgungsleistung weiter reduziert. Dies führt zu Kostenvorteilen beim Betrieb und erlaubt den Einsatz mit alternativen Energiequellen.

## Beschreibung

Im Gegensatz zu herkömmlichen auf dem Markt angebotenen Systemen benötigen Repeater gemäß nachfolgend beschriebenem System eine deutlich reduzierte Anschlußleistung (Versorgungsleistung), wobei die Ausgangsleistung pro Kanal zwischen einigen mW und mehreren Watt liegen kann.
Die Repeater sind mit kanalselektiven Umsetzermodulen ausgestattet (siehe Blockschaltbild 2). Die Anzahl der Module ist nicht begrenzt; zum Beispiel liegt die Anschlußleistung eines 4-Kanalsystems (250 mW pro Träger) bei Kleiner 40 Watt. Repeater mit geringer Anzahl von Kanälen bieten noch weit günstigere Werte.
Im Gegensatz zu herkömmlichen "ON-Frequency" Repeatern arbeitet das System mit Kanalverstärkern und ist optional in der Lage in betriebsfreier Zeit Systemteile stummzuschalten. (Anlage 3)

### Funktionsbeschreibung:

Am Eingang des Repeaters (Uplink- oder/und Downlinkpfades) wird die Eingangsleistung durch einen Verteiler zu kanalselektiven Umsetzermodulen verteilt. Diese Module sind mit schmalen Kanalfiltern (meist Filterung in ZF-Lage) ausgerüstet. Jedes Kanalmodul ist in der Frequenz abstimmbar und kann damit auf beliebige Kanäle eingestellt werden. Ein eingestellter Kanal wird durch das Modul übertragen, Nachbar- und andere Kanäle werden deutlich abgedämpft.
Die Ausgänge der Module sind mit Nachverstärkern ausgeröstet. Da pro Verstärker nur ein Kanal übertragen wird, können diese Verstärker mit hohem Wirkungsgrad in Betriebsart A-B bis C gebaut werden. Das heißt, es kann eine hohe Ausgangsleistung erzeugt werden, wobei Störprodukte durch Intermodulation sehr klein gehalten werden. Über ein Summierglied mit geeigneter Isolation zwischen den Eingängen werden die einzelnen Kanalverstärker zusammengefaßt und zum Ausgang geführt. Durch den Einsatz von Isolatoren an den Eingängen des Summierers kannn die Intermodulationsfestigkeit noch verbessert werden. (Anlage 2)
Bei 2 Richtungsrepeatern kann dieses Prinzip in Uplink- und/oder Downlink-Pfad verwendet werden.

Zur weiteren Reduzierung der Versorgungsleistung können in Zeiten ohne Funkbetrieb (oder mit eingeschränktem Funkbetrieb) Teile des Repeaters in "Stand by"-Modus geschaltet werden.
Solange kein Gespräch oder Datenverkehr über den Repeater geführt wird, muß lediglich der Organisationskanal im Downlink übertragen werden. Nicht benützte Downlink-Kanalpfade des Repeaters sowie Uplink-Pfade können ab- oder stummgeschaltet werden. (Anlage 3)
Die Steuerung der Ab-/Stummschaltung kann kanalselektiv durch Auswertung des Uplink-Spektrums erfolgen. Wird ein eingestellter Uplink-Träger registriert, wird der Pfad up- und downlink aktiv geschalten (wobei gemäß Funknetzspezifikation z. B. GSM 05.05 die max. Ansprechzeiten eingehalten werden müssen.)

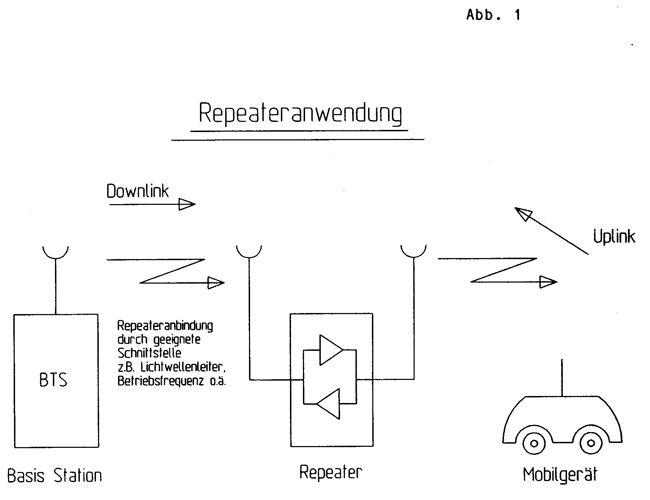

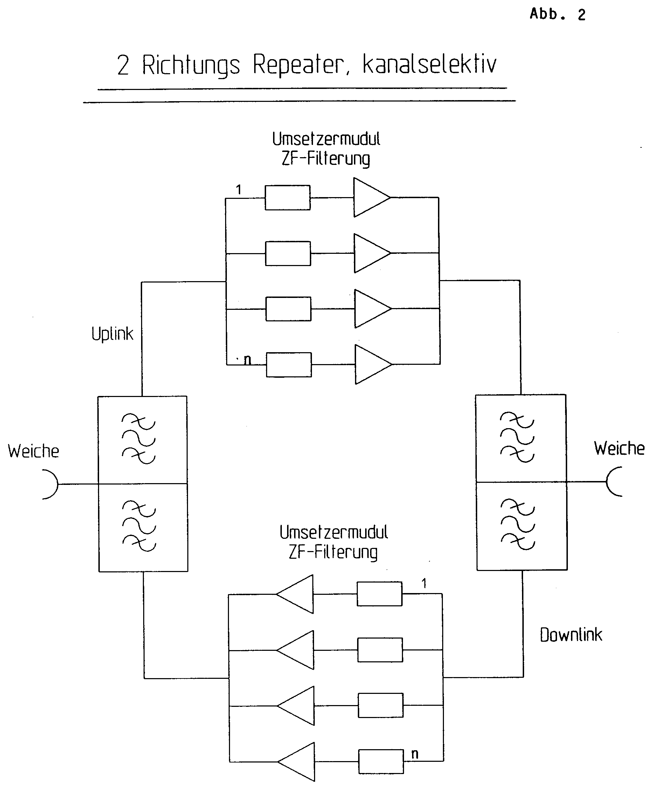

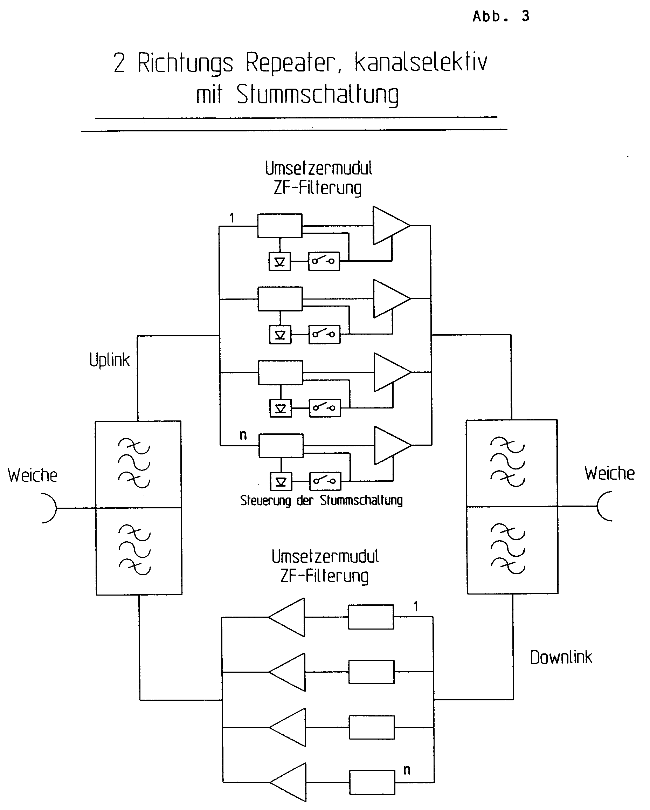

## Patentansprüche

1. ON-Frequency Repeater für digitale Funknetze mit Kanalverstärkerpfaden zur Optimierung des Wirkungsgrades und damit Reduzierung der Anschlußleistung, bei einer HF-Ausgangsleistung pro Kanal von bis zu mehreren Watt.

2. Stummschaltung von nicht genutzten Systemteilen in betriebslosen oder betriebsarmen Zeitabschnitten zur Reduzierung der Leistungsaufnahme.
Stummschaltung von Downlink-Gesprächskanälen und Uplink-Pfaden, wobei die Steuerung durch Auswertung des Uplink-Spectrums erfolgt.
